# EUROPÄISCHE PATENTSCHRIFT

(11) **EP 3 717 952 B1**
(45) Veröffentlichungstag und Bekanntmachung des Hinweises auf die Patenterteilung: **15.03.2023**
(21) Anmeldenummer: 18800931.0
(22) Anmeldetag: 12.11.2018
(51) Int. Cl.: B60S 1/48, B60S 1/56, G01S 7/481, G01S 7/497, G01S 17/931, G02B 27/00

(54) **VORRICHTUNG AUSGEBILDET ZUR UMFELDERFASSUNG UND VERFAHREN ZUR REINIGUNG EINER ABDECKUNG EINER SOLCHEN VORRICHTUNG**
APPARATUS EMBODIED TO DETECT THE SURROUNDINGS AND METHOD FOR CLEANING A COVER OF SUCH AN APPARATUS
DISPOSITIF CONÇU POUR DÉTECTER UN ENVIRONNEMENT ET PROCÉDÉ DE NETTOYAGE D'UN COUVERCLE D'UN TEL DISPOSITIF

(30) Priorität: 30.11.2017 DE 102017221530
(43) Veröffentlichungstag der Anmeldung: 07.10.2020
(73) Patentinhaber: Robert Bosch GmbH, 70442 Stuttgart (DE)
(72) Erfinder: OLIVEIRA, Joao, 4710-378 Braga (PT); HOLLECZEK, Annemarie, 71638 Ludwigsburg (DE); CALDELAS, Pedro, 4715-319 Braga (PT); ANDRE, Ricardo, 4715-278 Braga (PT); VORONTSOVA, Maria, 4710-229 Braga (PT); ALBUQUERQUE, Andre, 3550-165 Penalva do Castelo (PT)
(86) Internationale Anmeldenummer: PCT/EP2018/080873
(87) Internationale Veröffentlichungsnummer: WO 2019/105723

(56) Entgegenhaltungen:
- DE-A1-102011 004 442
- FR-A1- 2 690 635
- US-A1- 2012 117 745

## Beschreibung

Die Erfindung betrifft eine Vorrichtung ausgebildet zur Umfelderfassung, insbesondere zur Umfelderfassung eines Fahrzeugs gemäß dem Oberbegriff des Anspruchs 1, sowie ein Verfahren zur Reinigung einer Abdeckung einer solchen Vorrichtung.

### Stand der Technik

Die Fähigkeit ein Fahrzeugumfeld mittels Sensoren möglichst vollständig zu erfassen ist eine grundlegende Voraussetzung für automatisiertes Fahren. Dazu werden verschiedene Umfeldsensoren eingesetzt, wie zum Beispiels Radarsensoren, Ultraschallsensoren, Kameras und LIDAR Systeme, die jeweils in ein Fahrzeug integriert werden müssen. Typischerweise können Umfeldsensoren eines Fahrzeugs harschen Umgebungsbedingungen ausgesetzt sein. Verschmutzungen verschiedenster Art können auftreten. Zum Beispiel bei einer Kamera oder einem LIDAR Sensor können Verschmutzungen die Signalqualität signifikant beeinflussen, wenn beispielsweise durch eine Verschmutzung der Abdeckung eines Sende-/Empfangsfensters auszusendendes oder zu empfangenes Licht blockiert wird. Im schlimmsten Fall kann der betreffende Sensor keine oder nur noch eine unvollständige oder fehlerhafte Information über das Fahrzeugumfeld liefern. Insbesondere beim autonomen Fahren ist dies inakzeptabel und ein Mechanismus zur Entfernung einer Verschmutzung des Sensors muss vorgesehen werden.

Aus dem Stand der Technik gemäß US2016/0315564 A1 und WO 2015/003705 A1 sind Wischersysteme bekannt, die mittels eines Wischerblatts in der Art eines Scheibenwischers Verschmutzungen von der Abdeckung eines Sende-/Empfangsfensters eines Sensors entfernen.

Aus der WO 2016/004936 A1 ist bekannt, Schmutz mit Luftdüsen abzublasen.

Aus der DE 102011017684 A1 ist bekannt, Schmutz mittels Wasserdüsen abzuwaschen.

Aus DE102011004442 A1 ist ein Reinigungssystem für das Sichtfenster einer Kamera bekannt, das einen Scheibenwischer aufweist, sowie Düsen zur Aufbringung von Druckluft bzw. einer Reinigungsflüssigkeit. Weiterhin ist ein Temperatursensor vorgesehen. Verschmutzungen auf dem Sichtfenster der Kamera werden optisch erfasst und klassifiziert. Abhängig von der Klassifizierung sowie der Außentemperatur werden dann die Reinigungsdüsen und der Scheibenwischer angesteuert. Gegebenenfalls wird das Sichtfenster beheizt.

Aus DE3839484 A1 ist ein Reinigungssystem für Fahrzeugfenster bekannt, welches Druckluft- und Waschwasserdüsen umfasst, die an einem motorisierten Schlitten angeordnet sind, der mit einer Bürstenwalze ausgestattet ist und relativ zu Fensterscheibenoberfläche bewegbar ist.

Beim Einsatz von Wischersystemen ergibt sich das Problem, dass obwohl Verschmutzungen wie Wassertropfen, Schlammspritzer oder Insekten, die sich großflächig auf der Abdeckung eines Sende-/Empfangsfensters eines Sensors ansammeln können, sehr effektiv beseitigt werden, sich diese Verschmutzungen an den Seiten des Wischerblatts ansammeln können was nach einiger Zeit zu ungewollten Schmiereffekten führen kann.

Luftdüsen sind geeignet, Verschmutzungen zu beseitigen, die nicht sehr stark an der Oberfläche der Abdeckung haften, wie zum Beispiel Wassertropfen. Sobald die Verschmutzung jedoch stark haftet, wie zum Beispiel im Fall von getrocknetem Schlamm, Baumharz oder Insekten, sind Luftdüsen nicht mehr effizient beim Reinigen der Abdeckung. Wasserdüsen können derartige stark haftende Verschmutzungen lösen, jedoch können bei tiefen Temperaturen (z.B. T≤4°C) Probleme durch Gefrieren der Waschflüssigkeit und einer daraus folgenden Verstopfung der Düse auftreten. Durch den Einsatz von Frostschutzmitteln lässt sich die Grenztemperatur, ab der eine Nutzung der Wasserdüse möglich ist, zwar zu niedrigeren Temperaturen verschieben, dennoch kann eine zuverlässige Verwendbarkeit nicht unter allen möglichen Bedingungen gewährleistet werden.

Es wird demnach klar, dass jedes der bekannten Systeme nur bei bestimmten Bedingungen seine ideale Reinigungswirkung entfalten kann.

Die Aufgabe der vorliegenden Erfindung kann somit darin gesehen werden, die bekannten Prinzipien der Reinigung von Umfeldsensoren derart zu kombinieren, dass unabhängig von den Umgebungsbedingungen (zum Beispiel der Temperatur T) und der Art der Verschmutzung auf der Abdeckung eines Sende-/Empfangsfensters eines betreffenden Sensors, stets ein optimales Reinigungsergebnis erzielt werden kann.

### Offenbarung der Erfindung

Gemäß der Erfindung wird vorgeschlagen, eine Vorrichtung, ausgebildet zur Umfelderfassung mit einer Reinigungseinheit vorzusehen, wobei die Reinigungseinheit verschiedene Reinigungsprinzipien implementiert. Damit wird sichergestellt, dass unter verschiedenen Umweltbedingungen und bei unterschiedlichen Arten der Verschmutzung ein optimales Reinigungsergebnis erzielt werden kann und somit sichergestellt wird, dass der Umfeldsensor der Vorrichtung stets eine Umfelderfassung durchführen kann, ohne dass Signale durch Verschmutzungen blockiert werden.

Die Erfindung umfasst eine Vorrichtung zur Umfelderfassung, sowie ein Verfahren zur Reinigung einer Abdeckung einer Vorrichtung zur Umfelderfassung und ist in den unabhängigen Ansprüchen definiert. Weitere, vorteilhafte Ausführungsformen der Erfindung sind in den abhängigen Ansprüchen definiert.

Die Vorrichtung zur Umfelderfassung weist ein Gehäuse auf und wenigstens einen, innerhalb des Gehäuses angeordneten Sensor. Das Gehäuse weist ein Sende-/Empfangsfenster auf, durch das entsprechende Sensorsignale von dem Sensor in das Umfeld ausgesendet werden können und/oder Sensorsignale aus dem Umfeld empfangen werden können. Die Vorrichtung weist eine Abdeckung auf, wobei die Abdeckung für die Sensorsignale transparent ausgebildet ist und wobei die Abdeckung ausgebildet ist, das Sende-/Empfangsfenster und damit den wenigstens einen Sensor gegenüber einem äußeren Umfeld der Vorrichtung abzudecken. Bei dem Sensor kann es sich beispielsweise um eine Kamera und/oder einen LIDAR-Sensor handeln. Eine Kamera empfängt Licht, zum Beispiel sichtbares Licht, als Sensorsignale, daher ist die Abdeckung in diesem Fall beispielsweise als für Licht transparente Scheibe, z.B. aus Glas, ausgebildet. Ein LIDAR-Sensor sendet Laserstrahlen mit einer Wellenlänge z.B. im sichtbaren oder im IR-Bereich als Sensorsignale aus und empfängt die an Umfeldobjekten reflektierten Laserstrahlen mittels einer oder mehrerer Lichtdetektoren. Auch in diesem Fall kann die Abdeckung beispielsweise als eine transparente Scheibe, z.B. aus Glas, Polycarbonat (PC) oder Polymethylmethacrylat (PMMA) ausgebildet sein, die für Licht der Laserwellenlänge transparent ist.

Erfindungsgemäß weist die Vorrichtung eine Reinigungseinheit auf, welche an einer Außenseite des Gehäuses angeordnet ist und mittels einer Antriebseinheit relativ zu dem Gehäuse bewegbar ist. Die Reinigungseinheit ist ausgebildet, Verschmutzungen von der Abdeckung zu entfernen. Dazu weist die Reinigungseinheit mindestens drei erste Düsen auf, die ausgebildet sind eine Reinigungsflüssigkeit, insbesondere Wasser, auf die Abdeckung zu sprühen. Weiterhin weist die Reinigungseinheit zwei zweite Düsen auf, die ausgebildet sind ein Gas, insbesondere Druckluft, auf die Abdeckung zu blasen.

Bevorzugt weist die Reinigungseinheit außerdem mindestens ein Wischerblatt auf, das in Reibkontakt mit der Abdeckung ist. Besonders bevorzugt weist die Reinigungseinheit mindestens zwei derartige Wischerblätter auf. Die Wischerblätter sind ausgebildet, eine Verschmutzung durch die relative Bewegung von Abdeckung und Reinigungseinheit abzutragen und können dazu beispielsweise eine oder mehrere Gummilippen aufweisen.

In einer bevorzugten Ausführung weist das Gehäuse zumindest eine Führungsschiene auf. Die Reinigungseinheit ist mittels der Führungsschiene an der Außenseite des Gehäuses angeordnet und kann mittels der Antriebseinheit entlang der Führungsschiene bewegt werden, insbesondere vor der Abdeckung hin und her bewegt werden.

Alternativ kann die Reinigungseinheit beispielsweise auch über einen zentral gelagerten, verschwenkbaren Arm gesteuert werden bzw. über einen zentral gelagerten Motor. Alternativ ist auch jede andere mechanische Antriebseinheit denkbar, wie zum Beispiel über Zahnräder. Alternativ können die Führungsschienen beweglich angeordnet sein, wobei die Reinigunseinrichtung fest verbaut ist.

Die ersten und zweiten Düsen sind beispielsweise über Schläuche mit Reservoirs mit Reinigungsflüssigkeit bzw. Reinigungsgas verbunden. Bevorzugt können die Reinigungsflüssigkeit und/oder das Gas bei Bedarf beheizt werden, z.B. indem das jeweilige Reservoir beheizt wird und/oder indem die jeweilige Düse beheizt wird.

Die Reinigungseinheit kann außerdem mindestens ein Heizelement aufweisen, das ausgebildet ist, die Abdeckung zu beheizen.

Durch das Beheizen der Reinigungsflüssigkeit und/oder des Gases bzw. durch das Beheizen der Abdeckung kann eine Verschmutzung durch Eis auf der Abdeckung direkt entfernt werden. Weiterhin kann vermieden werden, dass bei niedrigen Außentemperaturen die Reinigungsflüssigkeit gefriert und dadurch die ersten Düsen verstopft werden.

Die Antriebseinheit kann beispielsweise einen Schrittmotor umfassen.

In einer bevorzugten Ausführung der Erfindung weist die zur Umfelderfassung ausgebildete Vorrichtung außerdem eine Detektoreinheit auf, welche ausgebildet ist, eine Verschmutzung der Abdeckung zu erfassen. Die Detektoreinheit kann dazu beispielsweise als optischer Sensor wie z.B. als Kamera ausgebildet sein. Die Detektoreinheit kann z.B. ausgebildet sein, in regelmäßigen zeitlichen Abständen ein Bild der Abdeckung erfassen. Mittels bekannter Methoden der digitalen Bildverarbeitung kann aus dem erfassten Bild festgestellt werden, ob eine Verschmutzung der Abdeckung vorliegt. Falls eine Verschmutzung erkannt wird, kann die Reinigungseinheit aktiviert werden. Damit wir der technische Vorteil erzielt, dass die Reinigungseinheit nur bei Bedarf, also nur bei Vorliegen einer tatsächlichen Verschmutzung der Abdeckung in Betrieb genommen und bewegt wird. Dies ermöglicht eine besonders effiziente Nutzung der Vorrichtung.

In einer weiteren bevorzugten Ausführung der Erfindung weist die zur Umfelderfassung ausgebildete Vorrichtung einen Temperaturfühler auf, welcher ausgebildet und angeordnet ist, eine Temperatur der Abdeckung und/oder der Umgebung der Vorrichtung zu erfassen.

Erfindungsgmäß ist vorgesehen, dass die Reinigungseinheit zwei zweite Düsen und mindestens drei erste Düsen aufweist, wobei die ersten und die zweiten Düsen bezüglich einer Bewegungsrichtung der Reinigungseinheit in Reihe angeordnet und wobei die drei ersten Düsen zwischen den zweiten Düsen angeordnet sind. Die ersten und zweiten Düsen können abhängig von der aktuellen Bewegungsrichtung der Reinigungseinheit derart angesteuert werden, dass sich ein Synergieeffekt zwischen der Reinigung mit einer Reinigungsflüssigkeit und der Reinigung durch ein Gas ergibt.

Nach einem weiteren Aspekt der Erfindung wird ein Verfahren zur Reinigung einer Abdeckung einer Vorrichtung zur Umfelderfassung beschrieben, wobei die Vorrichtung wie zuvor beschrieben ausgebildet ist. Die Vorrichtung weist eine Reinigungseinheit auf, die mittels der Antriebseinheit relativ zu dem Gehäuse bewegt wird, wobei Verschmutzungen von der Abdeckung durch die Reinigungseinheit entfernt werden.

Die Reinigungseinheit weist mindestens drei erste und zwei zweite Düsen auf, wobei die ersten und zweiten Düsen erfindungegmäß abhängig von der aktuellen Bewegungsrichtung der Reinigungseinheit angesteuert werden.

In einer bevorzugten Ausführung des Verfahrens wird außerdem eine Temperatur der Umgebung und/oder der Abdeckung gemessen und abhängig von der gemessenen Temperatur werden die ersten Düsen und/oder die zweiten Düsen angesteuert. Abhängig von der gemessenen Temperatur kann weiterhin eine Beheizung der Düsen und/oder der durch die Düsen abgegebenen Reinigungsmedien (Gas und/oder Reinigungsflüssigkeit) gesteuert werden.

Die erfindungsgemäße Vorrichtung und das erfindungsgemäße Verfahren bieten die Vorteile, dass eine Kombination von verschiedenen Reinigungsmitteln bzw. Reinigungsprinzipien in ein einzelnes, kompaktes System erfolgen kann. Die Reinigung der Abdeckung eines Sende-/Empfangsfenster eines Umfeldsensors kann adaptiv, abhängig von den aktuellen Umgebungsbedingungen, beispielsweise der Wettersituation, erfolgen. Durch den möglichen kombinierten Einsatz von Düsen und Wischerblättern wird verhindert, dass sich Schmutz an den Seiten der Wischerblätter ansammelt, da dieser durch das Gas und/oder die Reinigungsflüssigkeit aus den Düsen entfernt wird. In Kombination mit einer Beheizbarkeit der Reinigungsmedien (Gas und/oder Reinigungsflüssigkeit) kann außerdem eine Enteisung der Abdeckung erfolgen.

### Kurze Beschreibung der Zeichnungen

Figur 1 zeigt eine Vorrichtung nach einem Ausführungsbeispiel der Erfindung
Figuren 2 a) und 2 b) zeigen jeweils die Vorrichtung aus Figur 1 während des Betriebs der Reinigungseinheit.
Figur 3 zeigt ein Flussdiagramm einer möglichen Ausführung eines erfindungsgemäßen Verfahrens.

### Ausführungen der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

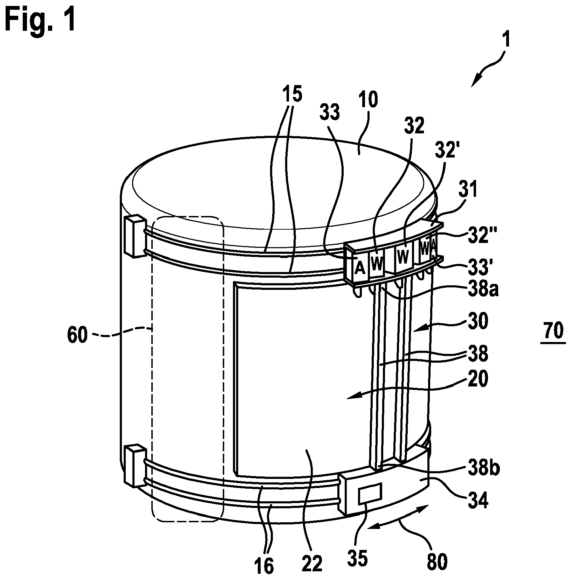

Figur 1 zeigt beispielhaft eine Vorrichtung 1 ausgebildet zur Umfelderfassung, die beispielsweise als LIDAR-Sensorsystem ausgebildet ist. Die Vorrichtung 1 weist ein Gehäuse 10 auf. Innerhalb des Gehäuses ist ein LIDAR-Sensor (nicht dargestellt) angeordnet. Das Gehäuse weist ein Sende-/Empfangsfenster 20 auf, durch das in bekannter Weise Laserstrahlen in die Umgebung gesendet und reflektierte Signale aus der Umgebung empfangen werden können. Das Sende-/Empfangsfenster 20 weist eine Abdeckung 22 auf, wobei die Abdeckung für Sensorsignale des LIDAR-Sensors transparent ausgebildet ist. Die Abdeckung ist ausgebildet, den LIDAR-Sensor gegenüber einem äußeren Umfeld 70 der Vorrichtung abzudecken. Das Gehäuse 10 ist in diesem Beispiel im Wesentlichen zylinderförmig ausgebildet, kann aber auch alternativ flach bzw. planar ausgebildet sein Die Abdeckung 22 ist als Glasscheibe ausgebildet die eine der Krümmung der Gehäusewand entsprechende Krümmung aufweist, so dass das Gehäuse 10 eine im Wesentlichen glatte Oberfläche aufweist. Alternativ kann die Abdeckung 22 aber auch aus einem Kunststoff, insbesondere PC oder PMMA geformt sein.

Die Vorrichtung 1 weist eine Reinigungseinheit 30 auf, welche an einer Außenseite des Gehäuses angeordnet ist und mittels einer Antriebseinheit 35 entlang des Gehäuses 10 bewegbar ist. Das Gehäuse 10 weist dazu zwei Führungsschienen 15 oberhalb der Abdeckung und zwei weitere Führungsschienen 16 unterhalb der Abdeckung auf, wobei die Reinigungseinheit 30 mittels der Führungsschienen 15, 16 an der Außenseite des Gehäuses 10 angeordnet ist. Die Führungsschienen 15, 16 folgen dabei der Krümmung des Gehäuses 10. Die Reinigungseinheit 30 weist drei erste Düsen 32, 32', 32" (Wasserdüsen) auf, die jeweils ausgebildet sind, Wasser auf die Abdeckung 22 zu sprühen. Dazu sind die Düsen 32, 32', 32" mit einem nicht dargestellten Wassertank, z.B. durch Schläuche, verbunden. Die Reinigungseinheit weist außerdem zwei zweite Düsen 33, 33' auf, die jeweils ausgebildet sind Druckluft, auf die Abdeckung 22 zu blasen. Die Düsen 32, 32', 32', 33 und 33' sind in einer ersten Halterungseinheit 31 angeordnet, wobei die Halterungseinheit 31 an den oberen Führungsschienen 15 gelagert ist. Die Reinigungseinheit weist außerdem zwei vertikal ausgerichtete Wischerblätter 38 auf, die jeweils Reibkontakt mit der Abdeckung 22 sind. Die Wischerblätter sind jeweils mit einem oberen Ende 38a an der ersten Halterungseinheit 31 befestigt. Die Düse 32` ist zwischen den Wischerblättern angeordnet. Zwei weitere erste Düsen 32 und 32" sind auf den jeweils anderen Seiten der Wischerblätter 38 angeordnet. An den Enden der Halterungseinheit 31 ist jeweils eine zweite Düse 33, 33' angeordnet. Somit sind die ersten Düsen zwischen den zweiten Düsen angeordnet. Die Wischerblätter 38 sind jeweils mit einem unteren Ende 38b an einer zweiten Halterungseinheit 34 befestigt, wobei die zweite Halterungseinheit 34 an den unteren Führungsschienen 16 gelagert ist. Die zweite Halterungseinheit 34 weist eine beispielsweise als Schrittmotor ausgebildete Antriebseinheit 35 auf, wobei die gesamte Reinigungseinheit 30 mittels der Antriebseinheit 35 entlang des Gehäuses hin und her bewegbar ist, wie durch den Doppelpfeil 80 angedeutet ist. Die ersten und die zweiten Düsen 32, 32', 32', 33 und 33' sind somit bezüglich einer Bewegungsrichtung 80 der Reinigungseinheit 30 in Reihe angeordnet. Wird die Reinigungseinheit 30 bewegt, so können die Wischerblätter 38 zuvor beispielsweise durch Wasser aus den Düsen 32, 32', 32" gelöste Verschmutzungen von der Abdeckung 22 abstreifen. Das in Bewegungsrichtung vorne liegende Wischerblatt beseitigt so grobe Verschmutzungen, kann jedoch kleinere Partikel oder Wasserspuren zurücklassen. Diese Restverschmutzungen können anschließend von dem in Bewegungsrichtung folgenden Wischerblatt beseitigt werden. Die als Luftdüsen ausgebildeten Düsen 33, 33' können optional beheizbar ausgebildet sein, so dass die ausgestoßene Luft eine erhöhte Temperatur aufweist und somit beispielsweise Eis auf der Abdeckung entfernen kann. Alternativ oder zusätzlich können auch die Düsen 32, 32' und 32" beheizbar ausgebildet sein.

Weiterhin ist eine Parkposition 60 seitlich neben der Abdeckung 22 vorgesehen, an der die Reinigungseinheit 30 verharrt, wenn keine Reinigung der Abdeckung 22 nötig ist. In der in Fig. 1 gewählten Darstellung ist eine Parkposition 60, in Draufsicht links neben der Abdeckung 22 dargestellt bzw. sichtbar. Es ist bevorzugt jedoch auf beiden Seiten der Abdeckung 22 jeweils eine Parkposition 60 vorgesehen. Nach Beendigung des Reinigungsvorgangs verbleibt die Reinigungseinheit 30 in der jeweilig erreichten Parkposition.

Ferner kann die Vorrichtung 1 eine Detektoreinheit aufweisen (nicht dargestellt), welche ausgebildet ist, eine Verschmutzung der Abdeckung 22, beispielsweise optisch, zu erfassen. Die Antriebseinheit kann dann bedarfsgerecht in Betrieb gesetzt werden und die Abdeckung kann nur bei einer tatsächlich vorhandenen Verschmutzung durch die Reinigungseinheit 30 gereinigt werden.

Ferner kann die Vorrichtung 1 einen Temperaturfühler aufweisen (nicht dargestellt), welcher ausgebildet ist, eine aktuelle Temperatur der Abdeckung 22 und/oder der Umgebung 70 zu erfassen. Wird eine sehr tiefe Temperatur erfasst, so kann beispielsweise auf einen Einsatz der Wasserdüsen 32, 32' und 32" verzichtet werden um ein Einfrieren zu vermeiden.

Obwohl die in Figur 1 dargestellte Vorrichtung eine gekrümmte Oberfläche des Gehäuses 10 sowie der Abdeckung 22 aufweist, kann das dargestellte Prinzip mit kleinen Anpassungen auch bei anderen Oberflächen, z.B. planaren Oberflächen eingesetzt werden. Ebenso ist es denkbar die Führungsschienen an anderen Stellen, beispielsweise horizontal neben der Abdeckung anzuordnen.

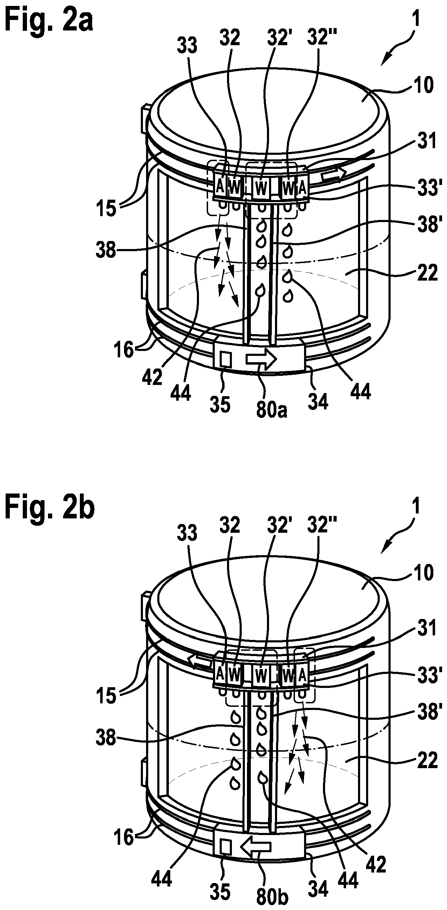

In den Figuren 2 a) und 2 b) sind zwei Betriebszustände einer erfindungsgemäßen Vorrichtung 1 während der Reinigung der Abdeckung 22 gezeigt. Der Aufbau der Vorrichtung 1 entspricht der in Figur 1 gezeigten Vorrichtung 1. In Figur 2 a) bewegt sich die Reinigungseinheit 30 nach rechts bzw. gegen den Uhrzeigersinn, wie durch den Pfeil 80a angedeutet. In Figur 2 b) bewegt sich die Reinigungseinheit 30 nach links bzw. im Uhrzeigersinn, wie durch den Pfeil 80b angedeutet. In der in Figur 2 dargestellten Ausführung der Erfindung werden die Düsen 33, 33`, 32, 32' und 32" abhängig von der aktuellen Bewegungsrichtung 80a, 80b der Reinigungseinheit 30 angesteuert.

Bewegt sich die Reinigungseinheit 30 wie in Figur 2 a) gezeigt nach rechts bzw. gegen den Uhrzeigersinn, so sind nur die Wasserdüsen 32' und 32", sowie die Luftdüse 33 aktiv. Die in Bewegungsrichtung 80a vorne liegende Wasserdüse 32" spritzt einen Wasserstrahl 44 auf die Abdeckung 22, durch den Verschmutzungen zunächst gelöst werden. Das in Bewegungsrichtung 80a vorne liegende Wischerblatt 38` streift die so gelösten Verschmutzungen ab. Die zwischen den Wischerblättern 38 und 38` angeordnete Wasserdüse 32` spritzt einen weiteren Wasserstrahl 44 auf den so bereits vorgereinigten Abschnitt der Abdeckung 22, um Restverschmutzungen oder Schmierspuren, die das Wischerblatt 38` hinterlassen hat abzuspülen. Das in Bewegungsrichtung hinten liegende Wischerblatt 38 streift die nun noch verbleibende Feuchtigkeit ab. Die in Bewegungsrichtung hinten liegende Luftdüse 33 bläst einen Luftstrom 42 auf die Abdeckung 22 wodurch diese getrocknet wird.

Bewegt sich die Reinigungseinheit 30 wie in Figur 2 b) gezeigt nach links bzw. im Uhrzeigersinn, so sind nur die Wasserdüsen 32 und 32', sowie die Luftdüse 33' aktiv. Die in Bewegungsrichtung 80b vorne liegende Wasserdüse 32 spritzt einen Wasserstrahl 44 auf die Abdeckung 22, durch den Verschmutzungen zunächst gelöst werden. Das in Bewegungsrichtung 80b vorne liegende Wischerblatts 38 streift die so gelösten Verschmutzungen ab. Die zwischen den Wischerblättern 38 und 38' angeordnete Wasserdüse 32` spritzt einen weiteren Wasserstrahl 44 auf den so bereits vorgereinigten Abschnitt der Abdeckung 22, um Restverschmutzungen oder Schmierspuren, die das Wischerblatt 38 hinterlassen hat abzuspülen. Das in Bewegungsrichtung hinten liegende Wischerblatt 38' streift die nun noch verbleibende Feuchtigkeit ab. Die in Bewegungsrichtung hinten liegende Luftdüse 33` bläst einen Luftstrom 42 auf die Abdeckung 22 wodurch diese getrocknet wird.

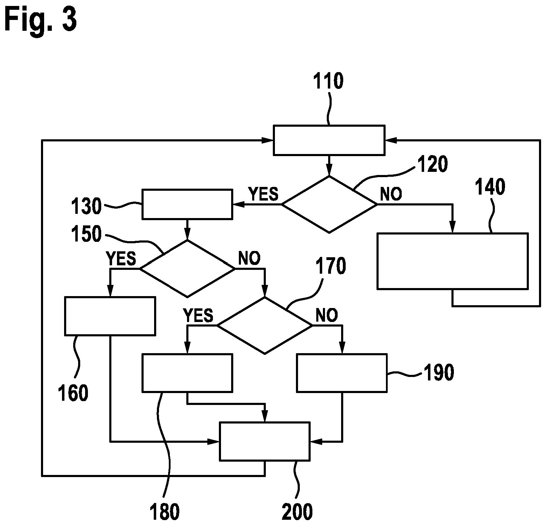

In Figur 3 ist eine alternative Ausführung eines erfindungsgemäßen Verfahrens in Form eines Flussdiagramms dargestellt.

In dieser Ausführung kann das Reinigungssystem drei verschiedene Betriebszustände einnehmen, abhängig von den aktuellen Umgebungsbedingungen, insbesondere der Temperatur. Als vierter bzw. "nullter" Zustand wird das Verblieben der Reinigungseinheit 30 in einer Parkposition 60 angesehen.

In einem ersten Verfahrensschritt 110 wird eine Detektoreinheit, welche ausgebildet ist, eine Verschmutzung der Abdeckung 22, beispielsweise optisch, zu erfassen, ausgelesen. In Schritt 120 wird mittels der von der Detektoreinheit ausgelesenen Daten überprüft, ob eine Verschmutzung der Abdeckung 22 vorliegt. Wenn keine Verschmutzung erkannt wird, verbleibt die Reinigungseinheit 30 gemäß Schritt 140 in der Parkposition 60. Alle Düsen 32, 32', 32", 33, 33`, sowie Heizvorrichtungen sind deaktiviert.

Falls eine Verschmutzung erkannt wird, wird einem auf den Schritt 120 folgenden Schritt 130 ein Temperaturfühler, welcher ausgebildet ist, eine aktuelle Temperatur der Abdeckung 22 und/oder der Umgebung 70 zu erfassen, ausgelesen. Es wird in Schritt 150 überprüft, ob die ausgelesene Temperatur unterhalb einer vorbestimmten, kritischen Temperatur Tc liegt, wobei Tc beispielsweise abhängig von der verwendeten Reinigungsflüssigkeit festgelegt werden kann (z.B. T_{C} = 0°C oder -10°C oder -20°C oder -30°C oder noch geringer, z.B. je nach verwendetem Frostschutzmittel und Konzentration desselben). Falls die erfasste Temperatur niedriger als T_{C} ist, wird die Reinigungseinheit 30 in Schritt 160 in einen ersten Betriebszustand versetzt, in dem die ersten Düsen 32, 32' und 32" deaktiviert bleiben. Die zweiten Düsen 33, 33` (Luftdüsen) werden aktiviert. Ebenfalls aktiviert wird eine Heizvorrichtung, die den Gasstrom der zweiten Düsen 33, 33' beheizt. Anschließend wird in Schritt 200 die Reinigungseinheit durch die Antriebseinheit 35 in Bewegung gesetzt und die Abdeckung 22 gereinigt.

Falls die erfasste Temperatur höher als Tc ist, wird in Schritt 170 überprüft, ob die erfasste Temperatur außerdem höher als ein Wert von 4°C ist. Ist dies nicht der Fall, so wird die Reinigungseinheit 30 in Schritt 180 in einen zweiten Betriebszustand versetzt, in dem die ersten Düsen 32, 32' und 32" und die zweiten Düsen 33, 33` (Luftdüsen) aktiviert sind. Ebenfalls aktiviert wird eine Heizvorrichtung, die den Gasstrom der zweiten Düsen 33, 33` und/oder die Reinigungsflüssigkeit beheizt. Anschließend wird in Schritt 200 die Reinigungseinheit durch die Antriebseinheit 35 in Bewegung gesetzt und die Abdeckung 22 gereinigt.

Ist die erfasste Temperatur höher als 4°C, so wird die Reinigungseinheit 30 in Schritt 190 in einen dritten Betriebszustand versetzt, in dem die ersten Düsen 32, 32' und 32" und die zweiten Düsen 33, 33` (Luftdüsen) aktiviert sind, ohne dass der Gasstrom und/oder die Reinigungsflüssigkeit beheizt werden. Anschließend wird in Schritt 200 die Reinigungseinheit durch die Antriebseinheit 35 in Bewegung gesetzt und die Abdeckung 22 gereinigt.

Nach Beendigung eines Reinigungsvorgangs wird das Verfahren durch erneutes Auslesen der Detektoreinheit (Schritt 110) neu gestartet. Ist die Verschmutzung beseitigt so wird die Reinigungseinheit 30 gemäß Schritt 140 in eine Parkposition 60 verbracht und alle zuvor aktiven Düsen 32, 32', 32", 33, 33` und Heizvorrichtungen werden deaktiviert.

## Patentansprüche

1. Vorrichtung (1), ausgebildet zur Umfelderfassung, insbesondere zur Umfelderfassung eines Fahrzeugs, aufweisend ein Gehäuse (10), wenigstens einen, innerhalb des Gehäuses (10) angeordneten Sensor,
wobei das Gehäuse ein Sende-/Empfangsfenster (20) und
eine Abdeckung (22) aufweist, wobei die Abdeckung (22) für Sensorsignale des Sensors transparent ausgebildet ist und wobei die Abdeckung (22) ausgebildet ist, das Sende-/Empfangsfenster (20) gegenüber einem äußeren Umfeld (70) der Vorrichtung (1) abzudecken, wobei
die Vorrichtung eine Reinigungseinheit (30) aufweist, welche an einer Außenseite des Gehäuses (10) angeordnet ist und mittels einer Antriebseinheit (35) relativ zu dem Gehäuse (10) bewegbar ist, wobei die Reinigungseinheit (30) ausgebildet ist, Verschmutzungen von der Abdeckung (22) zu entfernen und wobei die Reinigungseinheit (30) mindestens eine erste Düse (32, 32', 32") aufweist, die ausgebildet ist eine Reinigungsflüssigkeit (44), insbesondere Wasser auf die Abdeckung (22) zu sprühen und wobei die Reinigungseinheit (30) mindestens eine zweite Düse (33, 33') aufweist, die ausgebildet ist ein Gas (42), insbesondere Druckluft, auf die Abdeckung (22) zu blasen
**dadurch gekennzeichnet, dass** die Reinigungseinheit zwei zweite Düsen (33, 33') und mindestens drei erste Düsen (32, 32', 32") aufweist, wobei die ersten und die zweiten Düsen (32, 32', 32", 33, 33') bezüglich einer Bewegungsrichtung (80, 80a, 80b) der Reinigungseinheit (30) in Reihe angeordnet sind und wobei die ersten Düsen (32, 32', 32") zwischen den zweiten Düsen (33, 33') angeordnet sind, wobei die ersten und zweiten Düsen (32, 32', 32", 33, 33') abhängig von der aktuellen Bewegungsrichtung (80a, 80b) der Reinigungseinheit ansteuerbar sind.

2. Vorrichtung nach Anspruch 1, **dadurch gekennzeichnet, dass** das Gehäuse (10) zumindest eine Führungsschiene (15, 16) aufweist, wobei die Reinigungseinheit (30) mittels der Führungsschiene an der Außenseite des Gehäuses (10) angeordnet ist und mittels der Antriebseinheit (35) entlang der Führungsschiene (15, 16) bewegbar ist.

3. Vorrichtung nach einem der Ansprüche 1 oder 2, **dadurch gekennzeichnet, dass** die Reinigungsflüssigkeit (44) und/oder das Gas (42) beheizbar ist.

4. Vorrichtung nach einem der Ansprüche 1 bis 3, **dadurch gekennzeichnet, dass** die Reinigungseinheit (30) mindestens ein Wischerblatt (38, 38') aufweist, das in Reibkontakt mit der Abdeckung (22) ist.

5. Vorrichtung nach einem der Ansprüche 1 bis 4, **dadurch gekennzeichnet, dass** die Reinigungseinheit (30) mindestens ein Heizelement aufweist, das ausgebildet ist, die Abdeckung (22) zu beheizen.

6. Vorrichtung nach einem der Ansprüche 1 bis 5, **dadurch gekennzeichnet, dass** die Antriebseinheit (35) einen Schrittmotor umfasst.

7. Vorrichtung nach einem der Ansprüche 1 bis 6, **dadurch gekennzeichnet, dass** die Vorrichtung eine Detektoreinheit aufweist, welche ausgebildet ist, eine Verschmutzung der Abdeckung (22) zu erfassen.

8. Vorrichtung nach einem der Ansprüche 1 bis 7, **dadurch gekennzeichnet, dass** die Vorrichtung (1) einen Temperaturfühler aufweist, welcher ausgebildet und angeordnet ist, eine Temperatur der Abdeckung (22) und/oder der Umgebung (70) zu erfassen.

9. Verfahren zur Reinigung einer Abdeckung (22) einer Vorrichtung (1) nach einem der Ansprüche 1 bis 8, wobei die Reinigungseinheit (30) mittels der Antriebseinheit (35) relativ zu dem Gehäuse (10) bewegt wird, wobei Verschmutzungen von der Abdeckung (22) durch die Reinigungseinheit (30) entfernt werden, **dadurch gekennzeichnet, dass** die Reinigungseinheit zwei zweite Düsen (33, 33') und mindestens drei erste Düsen (32, 32', 32") aufweist, wobei die ersten und die zweiten Düsen (32, 32', 32", 33, 33') bezüglich einer Bewegungsrichtung (80, 80a, 80b) der Reinigungseinheit (30) in Reihe angeordnet sind und wobei die ersten Düsen (32, 32', 32") zwischen den zweiten Düsen (33, 33') angeordnet sind, wobei die ersten und zweiten Düsen (32, 32', 32", 33, 33') abhängig von der aktuellen Bewegungsrichtung (80a, 80b) der Reinigungseinheit angesteuert werden.

10. Verfahren nach Anspruch 9, wobei eine Temperatur der Umgebung (70) und/oder der Abdeckung (22) gemessen wird und abhängig von der gemessenen Temperatur die ersten Düsen (32, 32`, 32") und/oder die zweiten Düsen (33, 33') und eine Heizvorrichtungen zum Beheizen der zweiten Düsen (33, 33') angesteuert werden.

## Claims

1. Apparatus (1), configured to detect the surroundings, in particular to detect the surroundings of a vehicle, having
a housing (10), at least one sensor disposed within the housing (10),
wherein the housing has a transmitter/receiver window (20) and a cover (22), wherein the cover (22) is configured so as to be transparent to sensor signals of the sensor, and wherein the cover (22) is configured to cover the transmitter/receiver window (20) in relation to external surroundings (70) of the apparatus (1), wherein
the apparatus has a cleaning unit (30) which is disposed on an external side of the housing (10) and by means of a drive unit (35) is movable relative to the housing (10), wherein the cleaning unit (30) is configured to remove contaminations from the cover (22), and wherein the cleaning unit (30) has at least one first nozzle (32, 32', 32") which is configured to spray a cleaning liquid (44), in particular water, onto the cover (22), and wherein the cleaning unit (30) has at least one second nozzle (33, 33') which is configured to blow a gas (42), in particular compressed air, onto the cover (22), **characterized in that** the cleaning unit has two second nozzles (33, 33') and at least three first nozzles (32, 32', 32"), wherein the first and the second nozzles (32, 32', 32", 33, 33') in terms of a movement direction (80, 80a, 80b) of the cleaning unit (30) are disposed in series, and wherein the first nozzles (32, 32', 32") are disposed between the second nozzles (33, 33'), wherein the first and the second nozzles (32, 32', 32", 33, 33') are actuatable as a function of the current movement direction (80a, 80b) of the cleaning unit.

2. Apparatus according to Claim 1, **characterized in that** the housing (10) has at least one guide rail (15, 16), wherein the cleaning unit (30) by means of the guide rail is disposed on the external side of the housing (10) and by means of the drive unit (35) is movable along the guide rail (15, 16).

3. Apparatus according to one of Claims 1 or 2, **characterized in that** the cleaning liquid (44) and/or the gas (42) are/is able to be heated.

4. Apparatus according to one of Claims 1 to 3, **characterized in that** the cleaning unit (30) has at least one wiper blade (38, 38') which is in frictional contact with the cover (22).

5. Apparatus according to one of Claims 1 to 4, **characterized in that** the cleaning unit (30) has at least one heating element which is configured to heat the cover (22).

6. Apparatus according to one of Claims 1 to 5, **characterized in that** the drive unit (35) comprises a stepper motor.

7. Apparatus according to one of Claims 1 to 6, **characterized in that** the apparatus has a detector unit which is configured to detect any contamination of the cover (22).

8. Apparatus according to one of Claims 1 to 7, **characterized in that** the apparatus (1) has a temperature probe which is configured and disposed to detect a temperature of the cover (22) and/or of the environment (70).

9. Method for cleaning a cover (22) of an apparatus (1) according to one of Claims 1 to 8, wherein the cleaning unit (30) by means of the drive unit (35) is moved relative to the housing (10), wherein contaminations are removed from the cover (22) by the cleaning unit (30), **characterized in that** the cleaning unit has two second nozzles (33, 33') and at least three first nozzles (32, 32', 32''), wherein the first and the second nozzles (32, 32', 32", 33, 33') in terms of a movement direction (80, 80a, 80b) of the cleaning unit (30) are disposed in series, and wherein the first nozzles (32, 32', 32") are disposed between the second nozzles (33, 33'), wherein the first and the second nozzles (32, 32', 32", 33, 33') are actuated as a function of the current movement direction (80a, 80b) of the cleaning unit.

10. Method according to Claim 9, wherein a temperature of the environment (70) and/or of the cover (22) is measured, and the first nozzles (32, 32', 32") and/or the second nozzles (33, 33') and a heating apparatus for heating the second nozzles (33, 33') are actuated as a function of the measured temperature.

## Revendications

1. Dispositif (1), conçu pour détecter un environnement, en particulier pour détecter un environnement de véhicule, présentant
un boîtier (10), au moins un capteur disposé à l'intérieur du boîtier (10),
le boîtier présentant une fenêtre d'émission/réception (20) et un couvercle (22), le couvercle (22) étant conçu de manière transparente à des signaux du capteur et le couvercle (22) étant conçu pour recouvrir la fenêtre d'émission/réception (20) par rapport à un environnement extérieur (70) du dispositif (1),
le dispositif présentant une unité de nettoyage (30), laquelle est disposée sur un côté extérieur du boîtier (10) et est déplaçable par rapport au boîtier (10) au moyen d'une unité d'entraînement (35), l'unité de nettoyage (30) étant conçue pour enlever des salissures du couvercle (22) et l'unité de nettoyage (30) présentant au moins une première buse (32, 32', 32") qui est conçue pour pulvériser un fluide de nettoyage (44), en particulier de l'eau, sur le couvercle (22), et l'unité de nettoyage (30) présentant au moins une deuxième buse (33, 33') qui est conçue pour souffler un gaz (42), en particulier de l'air comprimé, sur le couvercle (22), **caractérisé en ce que** l'unité de nettoyage présente deux deuxièmes buses (33, 33') et au moins trois premières buses (32, 32', 32"), les premières et les deuxièmes buses (32, 32', 32'', 33, 33') étant disposées en rangée par rapport à une direction de déplacement (80, 80a, 80b) de l'unité de nettoyage (30) et
les premières buses (32, 32', 32") étant disposées entre les deuxièmes buses (33, 33'), les premières et deuxièmes buses (32, 32', 32", 33, 33') pouvant être commandées en fonction de la direction de déplacement (80a, 80b) actuelle de l'unité de nettoyage.

2. Dispositif selon la revendication 1, **caractérisé en ce que** le boîtier (10) présente au moins un rail de guidage (15, 16), l'unité de nettoyage (30) étant disposée au moyen du rail de guidage sur le côté extérieur du boîtier (10) et étant déplaçable le long du rail de guidage (15, 16) au moyen de l'unité d'entraînement (35).

3. Dispositif selon l'une des revendications 1 ou 2, **caractérisé en ce que** le liquide de nettoyage (44) et/ou le gaz (42) peu(ven)t être chauffé(s).

4. Dispositif selon l'une des revendications 1 à 3, **caractérisé en ce que** l'unité de nettoyage (30) présente au moins un balai d'essuie-glace (38, 38') qui est en contact de friction avec le couvercle (22).

5. Dispositif selon l'une des revendications 1 à 4, **caractérisé en ce que** l'unité de nettoyage (30) présente au moins un élément chauffant qui est conçu pour chauffer le couvercle (22).

6. Dispositif selon l'une des revendications 1 à 5, **caractérisé en ce que** l'unité d'entraînement (35) comprend un moteur pas à pas.

7. Dispositif selon l'une des revendications 1 à 6, **caractérisé en ce que** le dispositif présente une unité de détecteur, laquelle est conçue pour détecter une salissure du couvercle (22).

8. Dispositif selon l'une des revendications 1 à 7, **caractérisé en ce que** le dispositif (1) présente une sonde de température, laquelle est conçue et disposée pour détecter une température du couvercle (22) et/ou de l'environnement (70).

9. Procédé de nettoyage d'un couvercle (22) d'un dispositif (1) selon l'une des revendications 1 à 8, l'unité de nettoyage (30) étant déplacée par rapport au boîtier (10) au moyen de l'unité d'entraînement (35), des salissures étant enlevées du couvercle (22) par le biais de l'unité de nettoyage (30), **caractérisé en ce que** l'unité de nettoyage présente deux deuxièmes buses (33, 33') et au moins trois premières buses (32, 32', 32"), les premières et les deuxièmes buses (32, 32', 32", 33, 33') étant disposées en rangée par rapport à une direction de déplacement (80, 80a, 80b) de l'unité de nettoyage (30) et les premières buses (32, 32', 32'') étant disposées entre les deuxièmes buses (33, 33'), les premières et deuxièmes buses (32, 32', 32", 33, 33') étant commandées en fonction de la direction de déplacement (80a, 80b) actuelle de l'unité de nettoyage.

10. Procédé selon la revendication 9, une température de l'environnement (70) et/ou du couvercle (22) étant mesurée et les premières buses (32, 32', 32") et/ou les deuxièmes buses (33, 33') et un dispositif de chauffage servant au chauffage des deuxièmes buses (33, 33') étant commandés en fonction de la température mesurée.
